# EUROPÄISCHE PATENTSCHRIFT

(11) **EP 2 012 144 B1**
(45) Veröffentlichungstag und Bekanntmachung des Hinweises auf die Patenterteilung: **11.01.2012**
(21) Anmeldenummer: 07013194.1
(22) Anmeldetag: 05.07.2007
(51) Int. Cl.: G01V 8/20

(54) **Lichtgitter und Verfahren zum Betrieb eines Lichtgitters**
Light grid and method for operating a light grid
Grille lumineuse et procédé destiné au fonctionnement d'une grille lumineuse

(43) Veröffentlichungstag der Anmeldung: 07.01.2009
(73) Patentinhaber: SICK AG, 79183 Waldkirch (DE)
(72) Erfinder: Schmitz, Stephan, Dr., 79108 Freiburg (DE); Geiler, Martin, 77793 Gutach (DE); Brodd, Dieter, 79241 Ihringen (DE)
(74) Vertreter: Patentanwälte Westphal, Mussgnug & Partner

(56) Entgegenhaltungen:
- EP-A- 0 388 352
- EP-A- 1 296 161
- DE-A1- 2 648 631
- DE-A1- 10 120 940
- DE-A1- 19 541 410
- DE-C1- 19 611 195
- US-A- 6 130 437

## Beschreibung

Die Erfindung betrifft ein Lichtgitter gemäß dem Oberbegriff des Patentanspruchs 1 und ein Verfahren zum Betrieb eines Lichtgitters gemäß dem Oberbegriff des Patentanspruchs 8.

Es ist bekannt, Durchgänge durch ein Lichtgitter abzusichern, bei welchen an zwei gegenüberliegenden Seiten des Durchgangs jeweils eine Leiste vorgesehen ist, wobei die in der einen Leiste übereinander angeordneten Sendeeinheiten Lichtstrahlen aussenden, die von entsprechenden in der zweiten Leiste übereinander angeordneten Empfangseinheiten empfangen werden. Die Unterbrechung mindestens eines der Lichtstrahlen signalisiert den Durchtritt eines Objektes.

Anwendungen sind z.B. die Zugangssicherung von automatischen Fertigungsanlagen, die Absicherung von Einfahrtsöffnungen zu Fertigungszellen, die Absicherung von Abkantpressen und Palettieranlagen, die Transporttechnik, die Förder- und Lagertechnik, die Verpackungsindustrie, der Maschinenbau und die Automobilindustrie.

Falls ein nicht zugelassenen Objekt das Lichtgitter durchtritt, wird eine Sicherheitsfunktion ausgelöst, z.B. ein Alarm ausgelöst, eine gefährdende Produktionsmaschine abgeschaltet oder dergleichen.

Der Nachweis eines Gegenstandes im Lichtgitter beruht darauf, dass es zu einer Reduktion des Energieeintrages in eine gegebene Empfangseinheit kommt, weil der Gegenstand im Lichtstrahl die Empfangseinheit abschattet. Man führt daher eine Schaltbedingung für das Empfängersignal ein, insbesondere eine Schaltschwelle, bei deren Unterschreitung ein Schaltprozess ausgelöst wird, der anzeigt, dass ein Gegenstand in das Lichtgitter eingedrungen ist, was ggf. zum Auslösen einer Sicherheitsfunktion führt.

Die Auflösung eines Lichtgitters gibt die Größe des kleinsten Gegenstandes an, der vom Lichtgitter noch sicher nachgewiesen wird. Dabei wird die Auflösung besser, wenn die Größe des kleinsten sicher nachgewiesenen Gegenstandes kleiner wird.

Die vorstehend betrachtete Auflösung ist eine energetische Auflösung, sie ist von der Reduktion des Energieeintrags in eine Empfangseinheit durch den Gegenstand bestimmt.

Separat von der energetische Auflösung ist die räumliche Auflösung zu betrachten, die die Genauigkeit betrifft, mit der angegeben werden kann, wo der Gegenstand sich im Lichtgitter befindet. Für sicherheitsrelevante Lichtgitter ist es aber in der Regel primär nur von Bedeutung, festzustellen, ob ein Gegenstand in das Lichtgitter eingedrungen ist. Daher wird, wenn diese Auflösung gemeint ist, im folgenden stets von der räumlichen Auflösung gesprochen, während bei Verwendung des Wortes Auflösung ohne weiteres Attribut stets die energetische Auflösung gemeint ist.

Bei der Ermittlung der Auflösung ist zu berücksichtigen, dass in der Regel zwischen den einzelnen Lichtstrahlen des Lichtgitters Zwischenräume bestehen. Daher ist die Auflösung eines Lichtgitters in der Regel schlechter als der Durchmesser eines Lichtstrahls; es ist stattdessen üblich, den Abstand zwischen den voneinander abgewandten Außenseiten zweier Empfangseinheiten als Auflösung des Lichtgitters anzugeben.

Naturgemäß muss in sicherheitsrelevanten Anwendungen vermieden werden, dass durch eine andere Lichtquelle ein zusätzlicher Energieeintrag in eine gegebene Empfangseinheit erfolgt, da dieser zusätzliche Energieeintrag dazu führen könnte, dass die Schaltschwelle nicht mehr unterschritten wird, obwohl sich eigentlich ein Objekt im Strahlengang befindet, das zum Auslösen der Sicherheitsfunktion führen müsste. Aus diesem Grund ist es üblich, derartige Sensoranordnungen so zu betreiben, dass jeweils nur ein Paar, bestehend aus einer Sende- und einer zugeordneten Empfangseinheit, aktiviert sind.
Um den gesamten Durchgang zu überwachen erfolgt also ein sequentieller Scan, in dessen Verlauf die einzelnen Paare von Sende- und Empfangseinheiten nacheinander aktiviert werden.

Dies führt zu einer empfindlichen Limitierung der Ansprechzeit des Lichtgitters, denn wenn ein Gegenstand in einen Bereich des Lichtgitters unmittelbar eintritt, nachdem dieser Bereich aktiviert war, müssen erst alle anderen Sender- und Empfängerpaare durchlaufen worden sein, ehe der Gegenstand detektiert wird. Insbesondere Gegenstände, die sich mit hoher Geschwindigkeit bewegen, könnten in diesem Fall unter Umständen nicht mehr nachgewiesen werden, weil sie das Lichtgitter schon passiert haben, wenn es zur nächsten Aktivierung des Sender- und Empfängerpaares, das sie hätte nachweisen können, kommt.

Ausgehend von diesen, aus dem Stand der Technik bekannten, Systemen stellt sich also das Problem, die Ansprechzeit des Lichtgitters zu verbessern. Dieses Problem wird gelöst durch ein Lichtgitter mit den Merkmalen des Anspruchs 1 und ein Verfahren zum Betrieb eines Lichtgitters mit den Merkmalen des Anspruchs 8.

Vorteilhafte Ausführungen und Weiterbildungen der Erfindung sind in den jeweils rückbezogenen Unteransprüchen angegeben.

Der Erfindung liegt die Erkenntnis zugrunde, dass durch eine Anordnung, bei der sich auf jeder der den überwachten Durchgang begrenzenden Leisten alternierend angeordnet mindestens eine Gruppe von mindestens einer Sendeeinheit und mindestens eine Gruppe von mindestens einer Empfangseinheit befinden, wobei einer Gruppe von mindestens einer Empfangseinheit auf der einen Leiste jeweils mindestens eine Sendeeinheit auf der anderen Leiste gegenüberliegt und einer Gruppe von mindestens einer Sendeeinheit auf der einen Leiste mindestens eine Empfangseinheit auf der anderen Leiste gegenüberliegt, das Problem von Störlichteinträgen einer gegebenen Sendeeinheit in eine zur zugeordneten Empfangseinheit benachbarte Empfangseinheit entschärft wird.

"Gegenüberliegen" soll dabei folgendes bedeuten: Durch eine gegebene Gruppe von Sende- oder Empfangseinheiten auf einer der Leisten wird der Bereich auf dieser Leiste definiert, in dem diese Sende- oder Empfangseinheiten angeordnet sind. Eine irgendwo im mit diesem Bereich auf der ersten Leiste korrespondierenden Bereich der zweiten Leiste angeordnete Empfangs-oder Sendeeinheit liegt dann dieser Gruppe gegenüber. Die Korrespondenz zwischen Bereichen auf den beiden Leisten ergibt sich beispielsweise durch deren räumliche Anordnung; beispielsweise dadurch, dass sie gleich weit von einer Bezugsebene, z.B. dem Boden, beabstandet sind.

Dementsprechend umfasst die erfindungsgemäße Vorrichtung Sendeeinheiten, Empfangseinheiten sowie eine erste Leiste und eine zweite Leiste, welche gemeinsam den zu überwachenden Durchgang begrenzen und an, auf oder in denen die Sende- und Empfangseinheiten angeordnet sind, und eine Steuer- und Auswerteschaltung, die zur Ansteuerung der Sende- und Empfangseinheiten, zur Auslese von Empfangseinheiten, zur Prüfung, ob die in eine Empfangseinheit oder eine Gruppe von Empfangseinheiten eingestrahlte Lichtenergie eine Schaltbedingung erfüllt und zum Auslösen einer Sicherheitsfunktion, wenn dies nicht der Fall ist, ausgelegt ist. Dabei sind die Sendeeinheiten und die Empfangseinheiten so an der ersten Leiste und an der zweiten Leiste angeordnet sind, dass sich auf jeder der den überwachten Durchgang begrenzenden Leisten alternierend angeordnet mindestens eine Gruppe von mindestens einer Sendeeinheit und mindestens eine Gruppe von mindestens einer Empfangseinheit befinden, wobei einer Gruppe von mindestens einer Empfangseinheit auf der ersten oder zweiten Leiste jeweils mindestens eine Sendeeinheit auf der zweiten oder ersten Leiste gegenüberliegt und einer Gruppe von mindestens einer Sendeeinheit auf der ersten oder zweiten Leiste mindestens eine Empfangseinheit auf der zweiten oder ersten Leiste gegenüberliegt.

In dieser Anordnung wird die Problematik der Störlichteinträge dadurch entschärft, dass an den zu der Gruppe von mindestens einer Empfangseinheit benachbarten Plätzen auf einer gegebenen Leiste jeweils Gruppen von mindestens einer Sendeeinheit angeordnet sind, bei denen ein möglicher Störlichteintrag irrelevant ist.

In einer hinsichtlich der Einfachheit der Ansteuerung der Sende- und Empfangseinheiten und Auswertung der Signale der Empfangseinheiten besonders vorteilhaften Ausführungsform ist vorgesehen, dass die Gruppen von Sendeeinheiten jeweils aus genau einer Sendeeinheit und die Gruppen von Empfangseinheiten jeweils aus genau einer Empfangseinheit bestehen.

Eine hinsichtlich der Unterdrückung von Störsignalen und der Kosten der Anordnung besonders vorteilhafte alternative Ausgestaltung der Erfindung sieht vor, dass die Gruppen von Sendeeinheiten größer sind als die Gruppen von Empfangseinheiten oder die Gruppen von Empfangseinheiten größer sind als die Gruppen von Sendeeinheiten. Dies senkt die Materialkosten zur Herstellung des Lichtgitters durch bevorzugte Verwendung des jeweils preisgünstigeren der Bauteile Sendeeinheit und Empfangseinheit und erhöht ferner die räumliche Entfernung zwischen Gruppen von Empfangseinheiten auf einer gegebenen Leiste, wodurch ein Störeinfluss einer gegebenen Gruppe von Sendeeinheiten auf eine ihr nicht zugeordnete Gruppe von Empfangseinheiten reduziert wird. Außerdem verkürzt sich die für einen Scan benötigte Zeit, wenn mehrere Sendeeinheiten, die in einer Gruppe zusammengefasst sind, parallel Licht abstrahlen und durch den Empfänger unterschieden und erkannt werden um einen Faktor, der dem Inversen der Anzahl der parallelen Strahlen entspricht.

Die Unterdrückung von Störsignalen lässt sich weiter durch eine bevorzugte Anordnung optimieren, bei der die jeweils kleinere der Gruppen von Sendeeinheiten oder Empfangseinheiten so angeordnet ist, dass ihre Mitte der Mitte der größeren der Gruppen von Empfangseinheiten oder Sendeeinheiten gegenüberliegt.

Es hat sich insbesondere als günstig für die Minimierung der Beeinflussung von Empfangseinheiten durch ihnen nicht zugeordnete Sendeeinheiten erwiesen, wenn die Sendeeinheiten zur Abstrahlung von zueinander orthogonalen Pulsfolgen ausgelegt sind und die Empfängereinheiten Mittel zur Unterscheidung der von verschiedenen Sendeeinheiten ausgesendeten Strahlen über Korrelation aufweisen. Dabei ist der Begriff "orthogonale Pulsfolge" weit auszulegen und insbesondere nicht auf ideal orthogonale Pulsfolgen zu beschränken, da ideale Orthogonalität unter realen Bedingungen nicht erreichbar ist. Gemeint sind mit diesem Begriff insbesondere auch die realisiserbaren quasi-orthogonalen Pulsfolgen.

Eine weitere vorteilhafte Ausgestaltung der Erfindung sieht Mittel zur Durchführung eines Testscans vor, während dessen sichergestellt ist, dass kein Gegenstand im Lichtgitter befindlich ist und somit keine Abschattung vorliegen kann. Dadurch kann sichergestellt werden, dass die Empfangseinheiten in einem linearen Ansprechbereich betrieben werden.

Ebenfalls vorteilhaft ist es, zu demselben Zweck Mittel zur optoelektronischen Kommunikation innerhalb eines Paares, bestehend aus jeweils einer Gruppe von Sendeeinheiten und einer zugeordneten Gruppe von Empfangseinheiten, vorzusehen, um mitzuteilen, wann die Empfangseinheiten im linearen Bereich arbeiten.

Das erfindungsgemäße Verfahren zum Betrieb eines erfindungsgemäßen Lichtgitters umfasst die Schritte Aktivieren von Empfangseinheiten und Sendeeinheiten, Vergleichen des Energieeintrages in die aus mindestens einer Empfangseinheit gebildeten Gruppen von Empfangseinheiten mit einem Schwellenwert, Auslösen einer Sicherheitsfunktion, wenn der Wert des Energieeintrages in die aus mindestens einer Empfangseinheit gebildeten Gruppen von Empfangseinheiten unterhalb des Schwellenwertes liegt, wobei Paare, bestehend aus einer Gruppe von mindestens einer Empfangseinheit auf der ersten oder zweiten Leiste und einer Gruppe von mindestens einer Sendeeinheit, die sich auf der zweiten und ersten Leiste gegenüberliegen, gebildet werden und mindestens zwei benachbarte der so gebildeten Paare von Gruppen von Sendeeinheiten und Empfängereinheiten gleichzeitig angesteuert und ausgelesen werden.

Dabei hat es sich als vorteilhaft erwiesen, einen Testscan, während dessen sichergestellt ist, dass kein Gegenstand im Lichtgitter befindlich ist und während dessen somit keine Abschattung vorliegen kann, durchzuführen, in dem der Schwellenwert bestimmt wird.

Weiter ist es vorteilhaft, wenn zumindest die Sendeeinheiten, die in einer Gruppe zusammengefasst sind, Lichtkegel in korrelierten Pulsfolgen senden, die jeweils zu den in den Lichtkegeln der anderen in dieser Gruppe befindlichen Sendeeinheiten verwendeten korrelierten Pulsfolgen orthogonal sind, wobei die korrelierten Pulsfolgen von den in einer Gruppe zusammengeschlossenen zugeordneten Empfangseinheiten über Korrelation einer gegebenen Sendeeinheit zugeordnet werden können.

Orthogonal sind zwei Folgen von Lichtpulsen, die jeweils einen Lichtkegel ausbilden, dann, wenn sie keine oder keine nennenswerte Korrelation miteinander aufweisen. Diese weite Definition des Begriffs "Orthogonal" ist notwendig, da in der Realität bzw. unter realen Bedingungen ideale Orthogonalität von Folgen von Lichtpulsen kaum zu erzielen ist.

Es hat sich als vorteilhaft erwiesen, wenn die Empfangseinheiten (14.1-14.4) im linearen Ansprechbereich betrieben werden.

Im Folgenden wird die Erfindung anhand der beigefügten Zeichnungen näher erläutert.

Es zeigt
- Fig. 1:: ein Lichtgitter entsprechend einer Ausführungsform der Erfindung, an dem mittels eines Testobjektes einige charakteristische Abschattungssituationen demonstriert werden,
- Fig. 2:: ein Lichtgitter nach dem Stand der Technik, an dem mittels eines Testobjektes einige charakteristische Abschattungssituationen und die korrespondierenden Ausgabesignale demonstriert werden.
- Fig. 3:: ein Lichtgitter entsprechend einer weiteren Ausführungsform der Erfindung

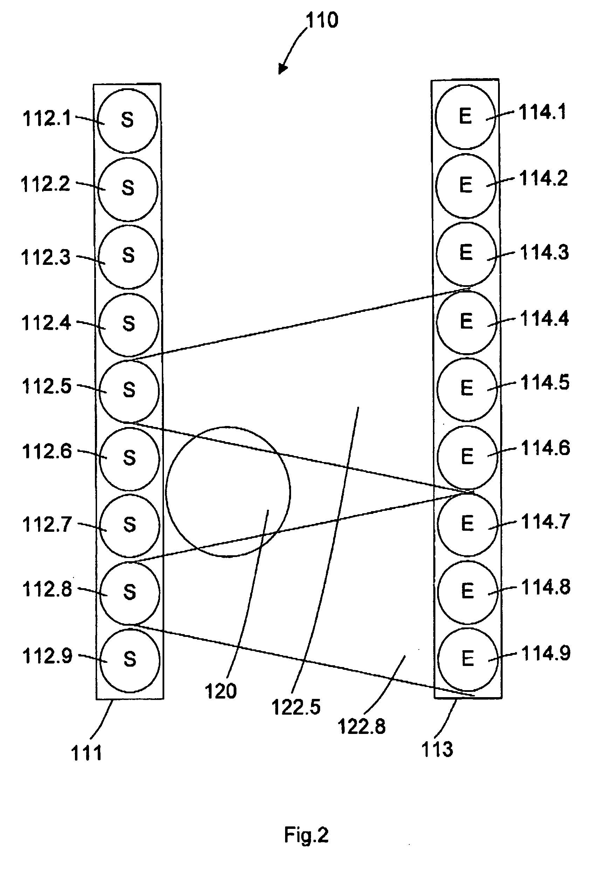

Figur 2 zeigt ein Lichtgitter 110 gemäß dem Stand der Technik. Das Lichtgitter 110 weist eine erste Leiste 111 und eine zweite Leiste 113 auf. Auf der ersten Leiste 111 sind Sendeeinheiten 112.1 bis 112.9 angeordnet. Auf der zweiten Leiste 113 sind Empfangseinheiten 114.1 bis 114.9 angeordnet. Nicht dargestellt ist die Steuer- und Auswerteelektronik, die zum Betrieb eines derartigen Lichtgitters 110 notwendig ist.

Die Sendeeinheiten 112.1 bis 112.9 senden, wenn sie durch die Steuerelektronik angesteuert werden, Lichtstrahlen aus, welche auf Grund der in der Figur 2 für die Sendeeinheiten 112.5, 112.8 beispielhaft übertrieben dargestellten Divergenz zu Lichtkegeln 122.5, 122.8 aufgeweitet sind. Im Lichtgitter 110 befindet sich ein Gegenstand 120, dessen Ausdehnung gerade dem Auflösungsvermögens des Lichtgitters 110 entspricht.

Anhand der Figur 2 wird unmittelbar deutlich, weshalb bei Lichtgittern gemäß dem Stand der Technik Paare von Sende- und Empfangseinheiten 112.1 und 114.1, 112.2 und 114.2, 112.3 und 114.3, 112.4 und 114.4, 112.5 und 114.5, 112.6 und 114.6, 112.7 und 114.7, 112.8 und 114.8, 112.9 und 114.9 zwingend einzeln anzusteuern und/oder auszuwerten sind. Würden nämlich die Sendeeinheiten 112.1 bis 112.9 und die Empfangseinheiten 114.1 bis 114.9 gleichzeitig betrieben, würde der Gegenstand 120 im Lichtgitter 110 nicht nachgewiesen. Zwar verhindert dieser Gegenstand 120 einen direkten Energieeintrag aus der Sendeeinheit 112.6 in die Empfangseinheit 114.6 und einen direkten Energieeintrag aus der Sendeeinheit 112.7 in die Empfangseinheit 114.7, auf Grund der Divergenz der von den Sendeeinheiten 112.5 bzw. 112.8 ausgesandten Lichtkegel 122.5 bzw. 122.8 kommt es aber dennoch zu einem Energieeintrag in die Empfangseinheiten 114.6 bzw. 114.7, sodass die Schaltschwelle nicht unterschritten wird und fälschlicherweise die Sicherheitsfunktion nicht ausgelöst wird, obwohl sich ein Gegenstand 120 im Lichtgitter 110 befindet.
Um dies zu vermeiden, werden daher die Paare von Sendeeinheiten und Empfangseinheiten 112.1 und 114.1, 112.2 und 114.2, 112.3 und 114.3, 112.4 und 114.4, 112.5 und 114.5, 112.6 und 114.6, 112.7 und 114.7, 112.8 und 114.8, 112.9 und 114.9 jeweils einzeln zeitversetzt zueinander betrieben. In dieser Betriebsweise wird der Gegenstand 120 sicher nachgewiesen.

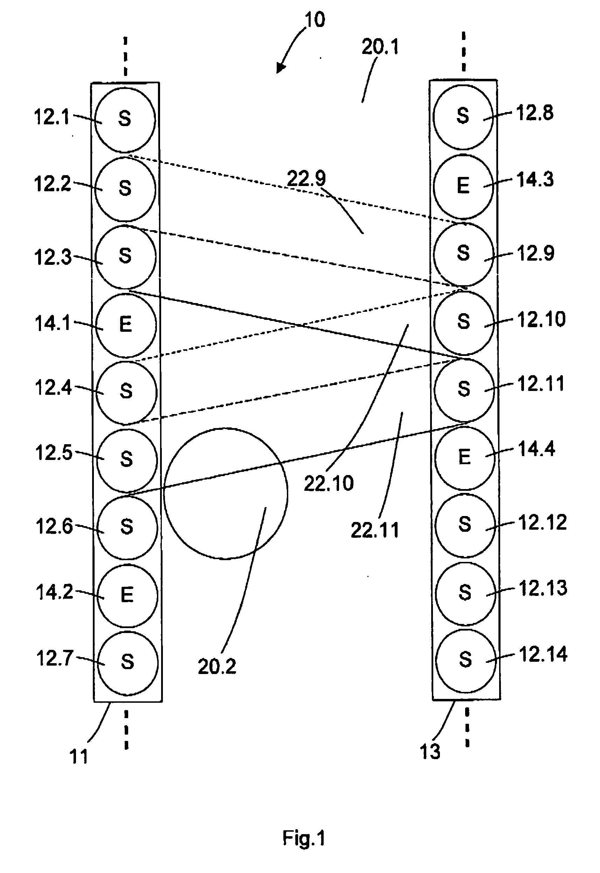

Figur 1 zeigt ein Lichtgitter 10 gemäß einer Ausführungsform der vorliegenden Erfindung. In Figur 1 sind Ausschnitte aus einer erste Leiste 11 und einer zweite Leiste 13 dargestellt.

Weiter erkennt man Sendeeinheiten 12.1 bis 12.14 und Empfangseinheiten 14.1 bis 14.4. Die Sendeeinheiten 12.1 bis 12.14 sind, ebenso wie die Empfangseinheiten 14.1 bis 14.4, teils auf der ersten Leiste 11 und teils auf der zweiten Leiste 13 angeordnet. Dabei folgt auf eine Gruppe von drei Sendeeinheiten 12.1, 12.2, 12.3; 12.4, 12.5, 12.6; 12.9, 12.10, 12.11; 12.12, 12.13, 12.14, jeweils eine Gruppe von einer Empfangseinheit 14.1; 14.2; 14.3; 14.4. In Figur 1 ist nur ein Ausschnitt aus der ersten Leiste 11 bzw. der zweiten Leiste 13 gezeigt, die gesamte Abfolge setzt sich in demselben Anordnungsprinzip oberhalb und unterhalb der abgebildeten Ausschnitte aus den Leisten 11 und 13 fort.

Dabei liegt der Mitte der Gruppe von Sendeeinheiten 12.1, 12.2, 12.3, welche hier durch die Position der Sendeeinheit 12.2 gegeben ist, auf der ersten Leiste 11 die Empfangseinheit 14.3 auf der zweiten Leiste 13 gegenüber, der Mitte der Gruppe der Sendeeinheiten 12.9, 12.10, 12.11, welche hier durch die Position der Sendeeinheit 12.10 gegeben ist, auf der zweiten Leiste 13 die Empfangseinheit 14.1 auf der ersten Leiste 11 gegenüber, der Mitte der Gruppe von Sendeeinheiten 12.4, 12.5, 12.6, welche hier durch die Position der Sendeeinheit 12.5 gegeben ist, auf der ersten Leiste 11 die Empfangseinheit 14.4 auf der zweiten Leiste 13 gegenüber, und der Mitte der Gruppe der Sendeeinheit 12.12, 12.13, 12.14, welche hier durch die Position der Sendeeinheit 12.13 gegeben ist, auf der zweiten Leiste 13 die Empfangseinheit 14.2 auf der ersten Leiste 11 gegenüber.

Anhand der Sendeeinheiten 12.9, 12.10 und 12.11 ist exemplarisch gezeigt, dass angesteuerte Sendeeinheiten 12.1-12.14 Lichtstrahlen aussenden, die als Folge der übertrieben dargestellten Divergenz zu Lichtkegeln 22.9, 22.10, 22.11 verbreitert sind. In der in Figur 1 gezeigten Ausführungsform sind die Sendeeinheiten einer Gruppe von Sendeeinheiten 12.1, 12.2, 12.3; 12.4, 12.5, 12.6; 12.9, 12.10, 12.11; 12.12, 12.13, 12.14 auf die der jeweiligen Sendeeinheit gegenüberliegende Sende- oder Empfangseinheit ausgerichtet. Dann ist das Zentrum des Lichtkegels jeder Sendeeinheit 12.1 bis 12.14 auf die jeweils gegenüberliegende Sende- oder Empfangseinheit gerichtet ist, wie beispielhaft anhand der Lichtkegel 22.9 bis 22.11 dargestellt ist: Das Zentrum des Lichtkegels 22.9 ist auf die der Sendeeinheit 12.9 gegenüberliegende Sendeeinheit 12.3 ausgerichtet, das Zentrum des Lichtkegels 22.10 ist auf die der Sendeeinheit 12.10 gegenüberliegende Empfangseinheit 12.4 ausgerichtet und das Zentrum des Lichtkegels 22.11 ist auf die der Sendeeinheit 12.11 gegenüberliegende Sendeeinheit 12.4 ausgerichtet.

Prinzipiell wäre es ebenfalls denkbar, die Sendeeinheiten einer Gruppe von Sendeeinheiten 12.1, 12.2, 12.3; 12.4, 12.5, 12.6; 12.9, 12.10, 12.11; 12.12, 12.13, 12.14 auf die jeweils der Gruppe zugeordnete Empfangseinheit 14.3; 14.1; 14.4; 14.2 auszurichten.

Aus Figur 1 ist insbesondere direkt erkennbar, dass in dieser Anordnung eine Beeinflussung einer nicht einer gegebenen Gruppe von Sendeeinheiten, zum Beispiel 12.9, 12.10 und 12.11, zugeordneten Empfangseinheit, zum Beispiel 14.2, 14.3 oder 14.4, durch die Divergenz der Lichtkegel 22.9 bis 22.11 nicht mehr möglich ist.

Dies wäre in gleicher Weise der Fall, falls die Ausrichtung der durch die Sendeeinheiten 12.9, 12.10 und 12.11 ausgesandten Lichtkegel 22.9, 22.10 und 22.11 so erfolgt wäre, dass das Zentrum dieser Kegel jeweils mit der der Gruppe von Sendeeinheiten 12.9, 12.10 und 12.11 zugeordneten Empfangseinheit 14.1 zusammenfiele, sondern die Ausrichtung jeweils auf die der Sendeeinheit 12.1-12.14 gegenüberliegende Sende- bzw. Empfangseinheit 12.1-12.14 bzw. 14.1-14.4 erfolgt wäre.

Um sicherzustellen, dass die Auflösung des Lichtgitters 10 erhalten bleibt, gibt es zwei Alternativen zum Betrieb des Lichtgitters:

Einerseits ist es möglich, die Sendeeinheiten 12.1 bis 12.14 so auszugestalten, dass zumindest die jeweils zu einer Gruppe von Sendeeinheiten 12.1, 12.2, 12.3; 12.9, 12.10, 12.11; 12.4, 12.5, 12.6; 12.12, 12.13, 12.14 gehörenden Sendeeinheiten als Lichtsignale jeweils zueinander orthogonale Pulsfolgen emittieren und die Empfangseinheit 14.1, 14.2, 14.3, 14.4 so ausgestaltet ist, dass sie in der Lage ist, die Pulsfolgen über Korrelation auseinander zu halten und der jeweiligen Sendeeinheit 12.1 bis 12.14 zuzuordnen.

Damit ist sichergestellt, dass, wenn nur der Energieeintrag aus einer Sendeeinheit 12.1. bis 12.14 durch einen Gegenstand 20.1, 20.2 im Lichtgitter blockiert wird, was auf Grund der dem Auflösungsvermögen des Lichtgitters 10 entsprechenden Größe des Gegenstandes 20.1, 20.2 mindestens der Fall ist, in der entsprechenden Empfängereinheit 14.1, 14.2, 14.3, 14.4 das dieser Sendeeinheit 12.1 bis 12.14 anhand ihrer speziellen Pulsfolge zuzuordnende Signal nicht oder zumindest nur abgeschwächt nachgewiesen wird, was zu einer Auslösung der Sicherheitsfunktion führt. Bei dieser bevorzugten Ausgestaltung der Erfindung bleibt auch die räumliche Auflösung des Lichtgitters 10 in vollem Umfang erhalten.

Andererseits kann beim Betrieb des erfindungsgemäßen Lichtgitters die in eine gegebene Empfangseinheit 14.1 bis 14.4 eingetragene Lichtleistung bestimmt werden. Kommt es zu einer zumindest teilweisen Abschattung der Empfangseinheit 14.1 bis 14.4 oder einer zu der Empfangseinheit 14.1 bis 14.4 zugeordneten Gruppen von Sendeeinheiten 12.9, 12.10, 12.11; 12.12, 12.13, 12.14; 12.1, 12.2, 12.3; 12.4, 12.5, 12.6, reduziert sich der in der jeweiligen Empfangseinheit 14.1, 14.2, 14.3, 14.4 der Energieeintrag entsprechend und die Sicherheitsfunktion wird ausgelöst.

Zur Bestimmung des "Solleintrages" in eine gegebene Empfangseinheit 14.1 bis 14.4 wird ein Testscan durchgeführt, bei dem sichergestellt ist, dass kein Gegenstand 20.1, 20.2 im Lichtgitter 10 befindlich ist. Die so ermittelten Werte können in der Auswerteeinheit gespeichert und mit den jeweils aktuellen Werten für die entsprechenden Energieeinträge in Beziehung gesetzt werden.

Wesentlich ist in diesem Zusammenhang, dass die Empfangseinheiten 14.1 bis 14.4 im linearen Bereich arbeiten. Dies wäre ebenso der Fall, wenn statt einzelner Empfangseinheiten 14.1 bis 14.4 Gruppen von Empfangseinheiten verwendet würden. Durch eine Variation von Sendeintensitäten der Sendeeinheiten 12.1 bis 12.14 lässt sich bei einem Testscan die Information gewinnen, mit welcher Sendeleistung die Sendeeinheiten 12.1 bis 12.14 zu betreiben sind, um dies noch zu gewährleisten.

Wenn während des Testscans die Sendeeinheiten 12.1 bis 12.14 durch die ihnen zugeordnete Empfangseinheit 14.1; 14.2; 14.3; 14.4 identifizierbar sind, was beispielsweise mittels einer speziellen, der jeweiligen Sendeeinheit 12.1 bis 12.14 zugeordneten Pulsfolge oder bei Einzelbetrieb der zu einer Gruppe gehörenden Sendeeinheiten 12.9, 12.10, 12.11; 12.12, 12.13, 12.14; 12.1, 12.2, 12.3; 12.4, 12.5, 12.6 ermöglicht werden kann, kann eindeutig oder zumindest mit sehr hoher Sicherheit identifiziert werden, ob eine Sendeeinheit 12.1 bis 12.14 oder eine Empfangseinheit 14.1 bis 14.4 defekt ist. Wird beim Testscan keine der der jeweiligen Empfangseinheit 14.3; 14.1; 14.4; 14.2 zugeordneten Sendeeinheiten 12.1, 12.2, 12.3; 12.4, 12.5, 12.6; 12.9, 12.10, 12.11; 12.12, 12.13, 12.14 erkannt, ist die Empfangseinheit defekt; wird wenigstens eine der Sendeeinheiten der Gruppe 12.1, 12.2, 12.3; 12.4, 12.5, 12.6; 12.9, 12.10, 12.11; 12.12, 12.13, 12.14 erkannt, so sind es die nicht erkannten Sendeeinheiten.

Alternativ zur Variation der Sendeleistung ist es möglich, Mittel zur optoelektronischen Kommunikation zwischen Empfangseinheiten 14.1, 14.2, 14.3, 14.4 und den ihnen zugeordneten Sendeeinheiten 12.9, 12.10, 12.11; 12.12, 12.13, 12.14; 12.1, 12.2, 12.3; 12.4, 12.5, 12.6 vorzusehen, mittels derer die Information ausgetauscht werden kann, ob sich die zugeordnete Empfangseinheit 14.1, 14.2, 14.3, 14.4 im linearen Betriebsbereich befindet oder nicht.

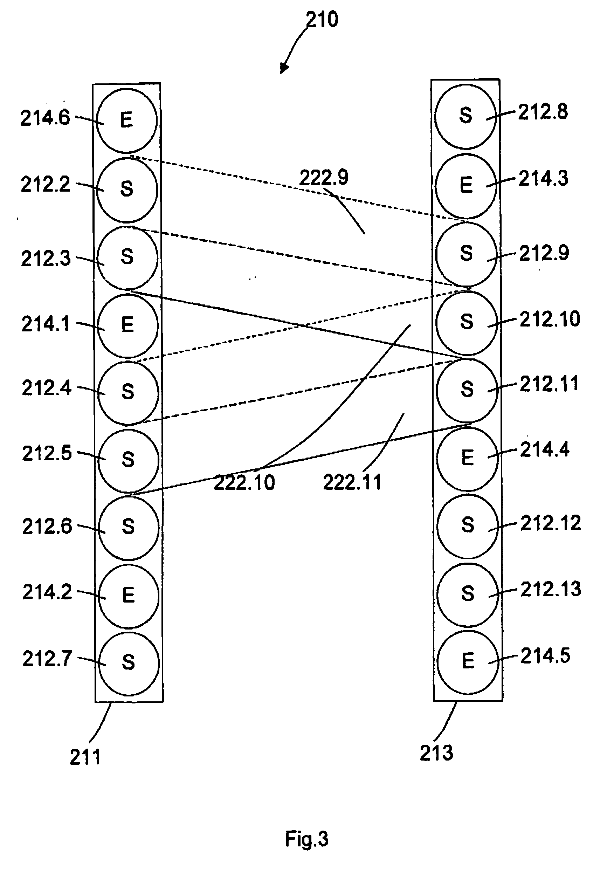

Eine andere Ausgestaltung eines Lichtgitters 210 gemäß dieser Erfindung zeigt Figur 3. In Figur 3 sind im Gegensatz zu Figur 1 nicht nur Ausschnitte aus einer erste Leiste 211 und einer zweite Leiste 213 dargestellt, sondern die gesamten Leisten 211 und 213.

Weiter erkennt man Sendeeinheiten 212.2 bis 212.13 und Empfangseinheiten 214.1 bis 214.6. Die Sendeeinheiten 212.2 bis 212.13 sind, ebenso wie die Empfangseinheiten 214.1 bis 214.6, teils auf der ersten Leiste 11 und teils auf der zweiten Leiste 13 angeordnet. Dabei folgt auf der ersten Leiste 211 auf eine Gruppe aus einer Empfangseinheit 214.6 eine Gruppe von zwei Sendeeinheiten 212.2, 212.3, dann wieder eine Gruppe aus einer Empfangseinheit 214.1, die nächste Gruppe von Sendeeinheiten 212.4, 212.5, 12.6, gefolgt von einer weiteren Gruppe aus einer Empfangseinheit 214.2 und einer letzten Gruppe aus einer Sendeeinheit 212.7. Auf der zweiten Leiste 213 ist die Anordnung der Gruppen eine Gruppe aus einer Sendeeinheit 212.8, eine Gruppe aus einer Empfangseinheit 214.3, eine Gruppe aus drei Sendeeinheiten 212.9, 212.10, 212.11, eine Gruppe aus einer Empfangseinheit 214.4, eine Gruppe aus zwei Sendeeinheiten 212.12, 212.13 und eine Gruppe aus einer Empfangseinheit 214.5. Ebenfalls dargestellt sind beispielhaft von den Sendeeinheiten 212.9, 212.10 bzw. 212.11 ausgestrahlte Lichtkegel 222.9, 222.10, 222.11.

Anhand der in Figur 3 dargestellten Ausführungsform erkennt man, dass nicht notwendigerweise alle Sendeeinheiten 212.2-212.13 zu gleich großen Gruppen zusammengefasst sein müssen, gleiches gilt für die Empfangseinheiten 214.1-214.6. Wesentlich ist lediglich die Bedingung, dass einer Gruppe von mindestens einer Empfangseinheit 214.1-214.6 auf der ersten oder zweiten Leiste jeweils mindestens eine Sendeeinheit 212.2-212.13 auf der zweiten oder ersten Leiste gegenüberliegt und einer Gruppe von mindestens einer Sendeeinheit 212.2-212.13 auf der ersten oder zweiten Leiste mindestens eine Empfangseinheit 214.1-214.6 auf der zweiten oder ersten Leiste gegenüberliegt. Beispielsweise liegt die Empfangseinheit 214.3 der Gruppe von Sendeeinheiten 212.2, 213.2 gegenüber.

Um sicherzustellen, dass die Auflösung des Lichtgitters 210 erhalten bleibt, gibt es dieselben Alternativen zum Betrieb des Lichtgitters 210 wie bei der Ausführungsform gemäß Figur 1. Allerdings ist bei der zweiten Alternative, bei der beim Betrieb des erfindungsgemäßen Lichtgitters 210 die in eine gegebenes Empfangseinheit 214.1 bis 214.6 eingetragene Lichtleistung bestimmt wird, der "Solleintrag" an Lichtleistung für die einzelnen Gruppen von Empfangseinheiten 214.1; 214.2; 214.3; 214.4; 214.5; 214.6 individuell zu bestimmen, da in unabgeschattetem Zustand Gruppen aus unterschiedlich vielen Sendeeinheiten 212.2-212.13 Lichtleistung in eine gegebene Empfangseinheit 214.1-214.6 einstrahlen. Dies kann wieder mit Hilfe eines Testscans geschehen; natürlich müssen dazu entsprechende Mittel zur Speicherung der Werte des "Solleintrages" in die Gruppen von Empfangseinheiten 214.1; 214.2; 214.3; 214.4; 214.5; 214.6 vorgesehen sein.

### Bezugszeichenliste

- 10, 210: Lichtgitter
- 110: Lichtgitter gemäß Stand der Technik
- 11, 111, 211: erste Leiste
- 12.1-12.14: Sendeeinheit
- 112.1-112.14: Sendeeinheit
- 212.2-212.13: Sendeeinheit
- 13, 113, 213: zweite Leiste
- 14.1-14.4: Empfangseinheit
- 114.1-114.4: Empfangseinheit
- 214.1-214.6: Empfangseinheit
- 20.1, 20.2: Gegenstand
- 120: Gegenstand
- 22.9-22.11: Lichtkegel
- 122.5, 122.8: Lichtkegel
- 222.9-229.11: Lichtkegel

## Patentansprüche

1. Lichtgitter (10), umfassend
- Sendeeinheiten (12.1-12.14),
- Empfangseinheiten (14.1-14.4),
- eine erste Leiste (11) und eine zweite Leiste(13, 213), welche gemeinsam einem zu überwachenden Durchgang begrenzen und an denen die Sende- (12.1-12.14) und Empfangseinheiten (14.1-14.4) angeordnet sind,
- eine Steuer- und Auswerteschaltung, die zur Auslese von Empfangseinheiten (14.1-14.4), zur Prüfung, ob die in eine Empfangseinheit (14.1-14.4) eingestrahlte Lichtenergie eine Schaltbedingung erfüllt, und zum Auslösen einer Sicherheitsfunktion, wenn dies nicht der Fall ist, sowie zur Ansteuerung der Sendeeinheiten (12.1-12.14) ausgelegt ist, wobei die Sende-(12.1-12.14) und Empfangseinheiten (14.1-14.4) so an der ersten Leiste (11) und an der zweiten Leiste (13) angeordnet sind, dass sich auf jeder der den überwachten Durchgang begrenzenden ersten und zweiten Leiste (11,13) alternierend angeordnet mindestens eine Gruppe von mindestens einer Sendeeinheit (12.1-12.14) und mindestens eine Gruppe von mindestens einer Empfangseinheit (14.1-14.4) befinden, wobei einer Gruppe von mindestens einer Empfangseinheit (14.1-14.4) auf der ersten oder zweiten Leiste jeweils mindestens eine Sendeeinheit (12.1-12.14) auf der zweiten oder ersten Leiste gegenüberliegt und einer Gruppe von mindestens einer Sendeeinheit (12.1-12.14) auf der ersten oder zweiten Leiste mindestens eine Empfangseinheit (14.1-14.4) auf der zweiten oder ersten Leiste gegenüberliegt,
**dadurch gekennzeichnet,**
**dass** mindestens zwei benachbarte Paare von Gruppen von Sende- und Empfängereinheiten (12.1-12.14; 14.1-14.4) gleichzeitig ansteuerbar und auslesbar sind.

2. Lichtgitter (10) nach Anspruch 1,
**dadurch gekenzeichnet,** dass die Gruppen von Sendeeinheiten (12.1, 12.2, 12.3; 12.4, 12.5, 12.6; 12.9, 12.10, 12.11; 12.12, 12.13, 12.14;) jeweils aus genau einer Sendeeinheit (12.1-12.14) und die Gruppen von Empfangseinheiten (14.1; 4.2; 14.3, 14.4) jeweils aus genau einer Empfangseinheit (14.1-14.4) bestehen.

3. Lichtgitter (10) nach Anspruch 1,
**dadurch gekennzeichnet, dass** die Gruppen von Sendeeinheiten (12.1, 12.2, 12.3; 12.4, 12.5, 12.6; 12.9, 12.10, 12.11; 12.12, 12.13, 12.14) größer sind als die Gruppen von Empfangseinheiten (14.1, 14.2, 14.3, 14.4) oder die Gruppen von Enipfangseinheiten (14.1, 14.2, 14.3, 14.4) größer sind als die Gruppen von Sendeeinheiten (12.1, 12.2, 12.3; 12.4, 12.5, 12.6; 12.9, 12.10, 12.11; 12.12, 12.13, 12.14).

4. Lichtgitter (10) nach Anspruch 3,
**dadurch gekennzeichnet, dass** die jeweils kleinere der Gruppen von Sendeeinheiten oder Empfangseinheiten (14.1, 14.2, 14.3, 14.4) so angeordnet ist, dass ihre Mitte der Mitte der größeren der Gruppen von Empfangseinheiten oder Sendeeinheiten (12.1, 12.2, 12.3; 12.4, 12.5, 12.6; 12.9, 12.10, 12.11; 12.12, 12.13, 12.14) gegenüberliegt.

5. Lichtgitter (10) nach einem Anspruch,
**dadurch gekennzeichnet, dass** die Sendeeinheiten (12.1-12.14) zur Abstrahlung von zueinander orthogonalen Pulsfolgen ausgelegt sind und die Empfängereinheiten (14.1-14.4) Mittel zur Unterscheidung der von verschiedenen Sendeeinheiten (12.1-12.14) ausgesendeten Lichtkegel (22.9-22.11) über Korrelation aufweisen.

6. Lichtgitter (10) nach einem Anspruch,
**dadurch gekennzeichnet, dass** Mittel zur Durchführung eines Testscans vorliegen, während dessen sichergestellt ist, dass kein Gegenstand (20.1, 20.2) im Lichtgitter (10) befindlich ist.

7. Lichtgitter (10) nach einem vorstehenden Anspruch,
**dadurch gekennzeichnet, dass** Mittel zur optoelektronischen Kommunikation zwischen jeweils einer Gruppe von Sendeeinheiten (12.1, 12.2, 12.3; 12.4, 12.5, 12.6; 12.9, 12.10, 12.11; 12.12, 12.13, 12.14) und einer zugeordneten Gruppe Empfangseinheiten (14.1, 14.2, 14.3, 14.4) vorgesehen sind, um mitzuteilen, wann die Empfangseinheiten im linearen Bereich arbeiten.

8. Verfahren zum Betrieb eines Lichtgitters (10) gemäß Anspruch 1, umfassend die Schritte
- Aktivieren von Empfangseinheiten (14.1-14.4) und Sendeeinheiten (12.1 - 12.14)
- Vergleichen des Energieeintrages in die aus mindestens einer Empfangseinheit (14.1 - 14.4) gebildeten Gruppen von Empfangseinheiten (14.1, 14.2, 14.3, 14.4) mit einem Schwellenwert,
- Auslösen einer Sicherheitsfunktion, wenn der Wert des Energieeintrages in die aus mindestens einer Empfangseinheit (14.1-14.4) gebildeten Gruppen von Empfangseinheiten (14.1, 14.2, 14.3, 14.4) unterhalb des Schwellenwertes liegt
**dadurch gekennzeichnet, dass** Paare, bestehend aus einer Gruppe von mindestens einer Empfangseinheit (14.1, 14.2, 14.3, 14.4) auf der ersten oder zweiten Leiste und einer Gruppe von mindestens einer Sendeeinheit (12.1, 12.2, 12.3; 12.4, 12.5, 12,6; 12.9, 12.10, 12.11; 12.12, 12.13, 12.14) auf der zweiten und ersten Leiste, welche sich gegenüberliegen, gebildet werden und dass mindestens zwei benachbarte der so gebildeten Paare von Gruppen von Sender- und Empfängereinheiten gleichzeitig aktiviert und ausgelesen werden.

9. Verfahren nach Anspruch 8
**dadurch gekennzeichnet,**
**dass** ein Testscan durchgeführt wird, während dessen sichergestellt ist, dass kein Gegenstand im Lichtgitter befindlich ist.

10. Verfahren nach Anspruch 8 oder 9,
**dadurch gekennzeichnet,**
**dass** zumindest die Sendeeinheiten (12-1-12.14), die in einer Gruppe (12.1, 12.2, 12.3; 12.4, 12.5, 12,6; 12.9, 12.10, 12.11; 12.12, 12.13, 12.14) zusammengefasst sind, Lichtkegel (22.9-22.11) in korrelierten Pulsfolgen senden, die jeweils zu den in den Lichtkegeln (22.9-22.11) der anderen in dieser Gruppe befindlichen Sendeeinheiten verwendeten korrelierten Pulsfolgen orthogonal sind, wobei die korrelierten Pulsfolgen von den in einer Gruppe zusammengeschlossenen zugeordneten Empfangseinheiten (14.1; 14.2; 14.3; 14.4; 214.1; 214.2; 214.3; 214.4; 214.5; 214.6) über Korrelation einer gegebenen Sendeeinheit (12.1-12.14) zugeordnet werden können.

11. Verfahren nach einem der Ansprüche 8 bis 10
**dadurch gekennzeichnet,**
**dass** die Empfangseinheiten (14.1-14.4) im linearen Ansprechbereich betrieben werden.

## Claims

1. A light grid (10) comprising
- transmitter units (12.1 to 12.14),
- receiver units (14.1 to 14.4),
- a first strip (11) and a second strip (13, 213) which together define a passageway to be monitored and on which the transmitter units (12.1 to 12.14) and receiver units (14.1 to 14.4) are arranged,
- a control and evaluation circuit which is designed to sort the receiver units (14.1 to 14.4) to check whether the light energy radiated into a receiver unit (14.1 to 14.4) meets a switching condition and to trigger a safety function if this is not the case, and to control the transmitter units (12.1 to 12.14), wherein the transmitter units (12.1 to 12.14) and receiver units (14.1 to 14.4) being arranged on the first strip (11) and on the second strip (13) in such a way that at least one group of at least one transmitter unit (12.1 to 12.14) and at least one group of at least one receiver unit (14.1 to 14.4) are located alternately on each of the first and second strips (11, 13) defining the monitored passageway, in each case a group of at least one receiver unit (14.1 to 14.4) on the first or second strip opposing at least one transmitter unit (12.1 to 12.14) on the second or first strip, and a group of at least one transmitter unit (12.1 to 12.14) on the first or second strip opposing at least one receiver unit (14.1 to 14.4) on the second or first strip, **characterised in that** at least two adjacent pairs of groups of transmitter and receiver units (12.1 to 12.14; 14.1 to 14.4) can be controlled and sorted at the same time.

2. The light grid (10) according to claim 1, **characterised in that** the groups of transmitter units (12.1, 12.2, 12.3; 12.4, 12.5, 12.6; 12.9, 12.10, 12.11; 12.12, 7.2.13, 12.14;) each consist of precisely one transmitter unit (12.1 to 12.14) and the groups of receiver units (14.1; 14.2; 14.3; 14.4) each consist of precisely one receiver unit (7.4.1 to 14.4).

3. The light grid (10) according to claim 1, **characterised in that** the groups of transmitter units (12.1, 12.2, 12.3; 12.4, 7.2.5, 12.6; 12.9, 12.10, 12.11; 12.12, 12.13, 12.14;) are larger than the groups of receiver units (14.1, 14.2, 14.3, 14.4), or the groups of receiver units (14.1, 14.2, 14.3, 14.4) are larger than the groups of transmitter units (12.1, 12.2, 12.3; 12.4, 12.5, 12.6; 12.9, 12.10, 12.11; 12.12, 12.13, 12.14).

4. The light grid (10) according to claim 3, **characterised in that** the smaller of the groups of transmitter units or receiver units (14.1, 14.2, 14.3, 14.4) is arranged in such a way that its centre opposes the centre of the larger of the groups of receiver units or transmitter units (12.1, 12.2, 12.3; 12.4, 12.5, 12.6; 12.9, 12.10, 12.11; 12.12, 12.13, 12.14).

5. The light grid (10) according to any one of the preceding claims, **characterised in that** the transmitter units (12.1 to 12.14) are designed to radiate orthogonal pulse trains and the receiver units (14.1 to 14.4) comprise means for distinguishing between the light cone (22.9 to 22,11) emitted by different transmitter units (12.1 to 12.14) via correlation.

6. The light grid (10) according to any one of the preceding claims, **characterised in that** means for carrying out a test scan are provided, during which it is ensured that no object (20.1, 20.2) is present in the light grid (10).

7. The light grid (10) according to any one of the preceding claims, **characterised in that** means for optoelectronic communication between each group of transmitter units (12.1, 12.2, 12.3; 12.4, 12.5, 12.6; 12.9, 12.10, 12.11; 12.12, 12.13, 12.14) and an associated group of receiver units (14.1, 14.2, 14.3, 14.4) are provided to advise when the receiver units operate in the linear range.

8. A method for operating a light grid (10) according to claim 1, comprising the following steps:
- activating receiver units (14.1 to 14.4) and transmitter units (12.1 to 12.14)
- comparing the energy entry into the group of receiver units (14.1, 14.2, 14.3, 14.4) formed of at least one receiver unit (14.1 to 14.4) with a threshold value,
- triggering a safety function if the value of the energy entry into the groups of receiver units (14.1, 14.2, 14.3, 14.4) formed of at least one receiver unit (14.1 to 7.4.4) is below the threshold value,
**characterised in that**
pairs consisting of a group of at least one receiver unit (7.9.1, 14.2, 14.3, 14.4) on the first or second strip and a group of at least one transmitter unit (12.1, 12.2, 12.3; 12.4, 12.5, 12.6; 12.9, 12.10, 12.11; 12.12, 12.13, 12.14) on the second and first strips, which are mutually opposed, are formed, and **in that** at least two adjacent of the pairs of groups of transmitter and receiver units thus formed are activated and sorted at the same time.

9. The method according to claim 8, **characterised in that** a test scan is carried out, during which it is ensured that no object is located in the light grid.

10. The method according to either claim 8 or claim 9, **characterised in that** at least the transmitter units (12.1 to 12.14) which are included in one group (12.1, 12.2, 12.3; 12.4, 12.5, 12.6; 12.9, 12.10, 12.11; 12.12, 12.13, 12.14) emit light cones (22.9 to 22.11) in correlated pulse trains which are each orthogonal to the correlated pulse trains used in the light cones (22.9 to 22.11) of the other transmitter units located in this group, the correlated pulse trains of the associated receiver units (14.1; 14.2; 14.3; 14.4; 214.1; 214.2; 214.3; 214.4; 214.5; 214.6) included in one group being assignable to a given transmitter unit (12.1 to 12.14) via correlation.

11. The method according to any one of claims 8 to 10, **characterised in that** the receiver units (14.1 to 14.4) are operated in the linear response range.

## Revendications

1. Grille lumineuse (10) comprenant :
- des unités émettrices (12.1-12.14),
- des unités réceptrices (14.1-14.4),
- une première barre (11) et une seconde barre (13, 213) qui délimitent en commun un passage à surveiller et sont munies des unités émettrices (12.1-12.14) et des unités réceptrices (14.1-14.4),
- un circuit de commande et d'exploitation pour lire les unités réceptrices (14.1-14.4), contrôler si l'énergie lumineuse tombée sur une unité réceptrice (14.1-14.4) remplit la condition de commutation et pour déclencher une fonction de sécurité si cela n'est pas le cas ainsi que pour commander les unités d'émission (12.1-12.14),
* les unités d'émission (12.1-12.14) et les unités de réception (14.1-14.4) sont installées sur une première barre (11) et sur une seconde barre (13) de façon que sur chacune des première et seconde barre (11, 13) délimitant le passage à surveiller, on a en alternance au moins un groupe composé d'au moins une unité émettrice (12.1-12.14) et au moins un groupe formé d'au moins une unité réceptrice (14.1-14.4),
* chaque fois au moins une unité émettrice (12.1-12.14) sur la seconde ou la première barre est en regard d'un groupe d'au moins une unité réceptrice (14.1-14.4) sur la première ou la seconde barre, et un groupe d'au moins une unité émettrice (12,1-12.14) sur la première ou la seconde barre se trouve en face d'au moins une unité réceptrice (14.1-14.4) sur la seconde ou la première barre,
grille lumineuse **caractérisée en ce qu'**
- au moins deux paires voisines de groupes d'unités émettrices et d'unités réceptrices (12.1-12.14 ; 14.1-14,4) sont susceptibles d'être commandées et lues simultanément.

2. Barrière lumineuse (10) selon la revendication 1,
**caractérisée en ce que**
les groupes d'unités émettrices (12.1, 12.2, 12.3, 12.4, 12.5, 12.6, 12.9, 12.10, 12.11, 12.12, 12.13, 12.14) se composent chaque fois précisément d'une unité émettrice (12.1-12.14) et les groupes d'unités réceptrices (14.1, 14.2, 14.3, 14.4) se composent chacun précisément d'une unité réceptrice (14.1-14.4).

3. Barrière lumineuse (10) selon la revendication 1,
**caractérisée en ce que**
les groupes d'unités émettrices (12.1, 12.2, 12.3, 12.4, 12.5, 12.6, 12.9, 12.10, 12,11, 12.12, 12.13, 12.14) sont plus grands que les groupes d'unités réceptrices (14.1, 14.2, 14.3, 14.4) ou les groupes d'unités réceptrices (14.1, 14.2, 14.3, 14.4) sont plus grands que les groupes d'unités émettrices (12.1, 12.2, 12.3, 12.4, 12.5, 12.6, 12.9, 12.10, 12.11, 12.12, 12.13, 12.14).

4. Barrière lumineuse (10) selon la revendication 3,
**caractérisée en ce que**
chaque fois les plus petits des groupes d'unités émettrices ou d'unités réceptrices (14.1, 14.2, 14.3, 14.4) sont disposés de façon à ce que leur milieu se trouve en face du milieu des groupes plus grands d'unités réceptrices ou d'unités émettrices (12.1, 12.2, 12.3, 12.4, 12.5, 12.6, 12.9, 12.10, 12.11, 12.12, 12.13, 12.14).

5. Barrière lumineuse (10) selon l'une des revendications précédentes,
**caractérisée en ce que**
les unités émettrices (12.1-12.14) sont conçues pour rayonner des suites d'impulsions orthogonales et les unités réceptrices (14.1-14.4) comportent des moyens pour distinguer entre les cônes lumineux (22.9-22.11) émis par les différentes unités émettrices (12.1-12.14), en procédant par corrélation.

6. Barrière lumineuse (10) selon l'une des revendications précédentes,
**caractérisée par** des moyens pour la mise en oeuvre d'un balayage de test tout en s'assurant qu'il n'y a pas d'objet (20.1, 20.2) dans la grille lumineuse (10).

7. Barrière lumineuse (10) selon l'une des revendications précédentes,
**caractérisée par**
des moyens de communication opto-électriques entre chaque fois un groupe d'unités émettrices (12.1, 12.2, 12.3, 12.4, 12.5, 12.6, 12.9, 12.10, 12.11, 12.12, 12.13, 12.14) et un groupe associé d'unités réceptrices (14.1, 14.2, 14.3, 14.4) pour indiquer quand les unités réceptrices se trouvent dans la plage linéaire.

8. Procédé de gestion d'une grille lumineuse (10) selon la revendication 1,
comprenant les étapes suivantes :
- activer les unités réceptrices (14.1-14.4) et les unités émettrices (12.1-12.14),
- comparer à un seuil l'apport en énergie dans au moins une unité réceptrice (14.1-14.4) formée par des groupes d'unités réceptrices (14.1, 14.2, 14.3, 14.4),
- déclencher une fonction de sécurité si la valeur de l'apport d'énergie dans les groupes formés d'au moins une unité réceptrice (14.1-14.4) parmi des unités réceptrices (14.1, 14.2, 14.3, 14.4) se situe en dessous du seuil,
procédé **caractérisé en ce que**
on forme des paires composées d'un groupe d'au moins une unité réceptrice (14.1, 14.2, 14.3, 14.4) sur la première ou la seconde barre et d'un groupe d'au moins une unité émettrice (12.1, 12.2, 12.3, 12.4, 12.5, 12.6, 12.9, 12.10, 12.11, 12.12, 12.13, 12.14) sur la seconde et la première barre et qui se font face, et
- au moins deux paires de groupe d'unités émettrices et d'unités réceptrices ainsi formées, voisines peuvent être activées et lues simultanément.

9. Procédé selon la revendication 8,
**caractérisé en ce qu'**
on effectue un premier balayage de test pour s'assurer qu'il n'y a pas d'objet dans la barrière lumineuse.

10. Procédé selon la revendication 8 ou 9,
**caractérisé en ce qu'**
au moins les unités émettrices (12.1-12.14) regroupées dans un groupe (12.1, 12.2, 12.3, 12.4, 12.5, 12.6, 12.9, 12.10, 12.11, 12.12, 12.13, 12.14), émettent des cônes lumineux (22.9-22.11) suivant des suites d'impulsions en corrélation, qui sont orthogonales chaque fois aux autres suites d'impulsions en corrélation utilisées dans les cônes lumineux (22.9-22.11) des autres unités d'émission de ces groupes,
* les suites d'impulsions en corrélation sont associées par les unités réceptrices réunies en un groupe (14.1, 14.2, 14.3, 14.4, 214.1, 214.2, 214.3, 214.4, 214.5, 214.6), par corrélation à une unité émettrice (12.1-12.14) donnée.

11. Procédé selon l'une des revendications 8 à 10,
**caractérisé en ce que**
les unités réceptrices (14.1-14.4) fonctionne dans une plage de sollicitation linéaire.
